# EUROPEAN PATENT SPECIFICATION

(11) **EP 1 447 832 B1**
(45) Date of publication and mention of the grant of the patent: **08.04.2009**
(21) Application number: 03257983.1
(22) Date of filing: 18.12.2003
(51) Int. Cl.: H01J 9/00

(54) **CRT separation apparatus**
Trennvorrichtung für Kathodenstrahlröhre
Appareil de séparation pour tube à rayons cathodiques

(30) Priority: 14.02.2003 JP 2003036225
(43) Date of publication of application: 18.08.2004
(73) Proprietor: MITSUBISHI DENKI KABUSHIKI KAISHA, Chiyoda-ku Tokyo 100-8310 (JP)
(72) Inventor: Hakage, Hidenori c/o Mitsubishi Denki K. K., Tokyo 100 (JP); Kogiso, Masami, Chiyoda-ku Tokyo 100 (JP); Hama, Tamotsu, Chiyoda-ku Tokyo 100 (JP)
(74) Representative: Whitlock, Holly Elizabeth Ann

(56) References cited:
- EP-A- 0 962 954
- DE-A- 4 229 684
- DE-A- 4 330 230
- JP-A- 11 154 470
- JP-A- 2000 299 058
- US-A- 5 556 018
- US-A- 6 089 433

## Description

### BACKGROUND OF THE INVENTION

### 1. Field of the Invention

This invention relates to an apparatus for separating a cathode ray tube (CRT) into parts suitable for disposal or recycling of the glass.

### 2. Description of Related Art

When a CRT is disposed of or recycled, it is necessary to separate the glass faceplate, which has a comparatively low lead content, from the glass funnel, which has a comparatively high lead content.

One known separation method places a conductor such as a metal wire in conformal contact with the CRT at the separation position and heats the conductor, thereby generating thermal strain that separates the CRT. The conductor may be, for example, a nichrome wire placed in a scratch-like groove that is made in the CRT during an initial step in the separation process, as taught in Japanese Unexamined Patent Application Publication No. 2000-299058, (pp. 4-5 and Fig. 3). The nichrome wire can be heated by current from a power source. Alternatively, the conductor may be heated by a high-frequency induction heating coil that surrounds the CRT, as taught in Japanese Unexamined Patent Application Publication No. 11-154470 (pp. 3-6 and Fig. 2).

A problem with the use of a conductor such as a nichrome wire is deterioration of the conductor material by thermal embrittlement: due to repeated heating, the conductor loses its tensile strength and becomes apt to break. The resulting need for frequent replacement of the conductor makes this an inefficient separation method.

A problem with the use of an induction heating coil is the need to use induction heating coils of different sizes and shapes for CRTs of different sizes and shapes. Each time a different type of CRT is separated, a different induction heating coil must be installed in the separation apparatus, making the separation process extremely inefficient. Alternatively, a single large induction heating coil can be used for all types of CRT, but this is also inefficient in terms of energy transfer from the induction heating coil to the conductor, and it is still necessary to switch the setting of the power supplied to the induction heating coil according to the type of CRT.

### SUMMARY OF THE INVENTION

An object of the present invention is to provide an apparatus that can separate a CRT quickly, accurately, and efficiently at a desired separation position.

Another object of the invention is to provide an apparatus that can efficiently separate different types of CRTs without requiring switching of components or settings.

The invented CRT separation apparatus includes a high-frequency power source and a transformer. The primary side of the transformer is coupled to the high-frequency power source. The secondary side of the transformer is coupled to a separation cable. A support guide supports the separation cable at a fixed position. A movable guide wraps the separation cable around the CRT. A tension guide applies tension to the separation cable.

The CRT is separated by using the movable guide to wrap the separation cable around the CRT at the desired separation position, then switching on the high-frequency power source. Joule heat generated by high-frequency current in the separation cable creates thermal strain in the CRT, effecting the separation.

The separation process is quick and efficient because the transformer transfers energy efficiently from the power source to the separation cable, and the tension guide keeps the separation cable held tight against the CRT. The separation process is accurate because the tension guide prevents the separation cable from slipping away from the desired separation position. The movable guide can wrap the separation cable around any type of CRT.

### BRIEF DESCRIPTION OF THE DRAWINGS

In the attached drawings:
FIG. 1 is a plan view illustrating a CRT separation apparatus according to a first embodiment of the invention;
FIGs. 2 and 3 are plan views illustrating respective stages in the separation process in the first embodiment;
FIG. 4 is a plan view illustrating a CRT separation apparatus according to a second embodiment of the invention;
FIGs. 5, 6, 7, and 8 are plan views illustrating respective stages in the separation process in the second embodiment;
FIG. 9 is a plan view illustrating a CRT separation apparatus according to a variation of the second embodiment;
FIGs. 10, 11, and 12 are plan views illustrating respective stages in the separation process in the variation of the second embodiment; and
FIG. 13 shows a sectional view of a preferred type of separation cable.

### DETAILED DESCRIPTION OF THE INVENTION

Embodiments of the invention will now be described with reference to the attached drawings, in which like elements are indicated by like reference characters.

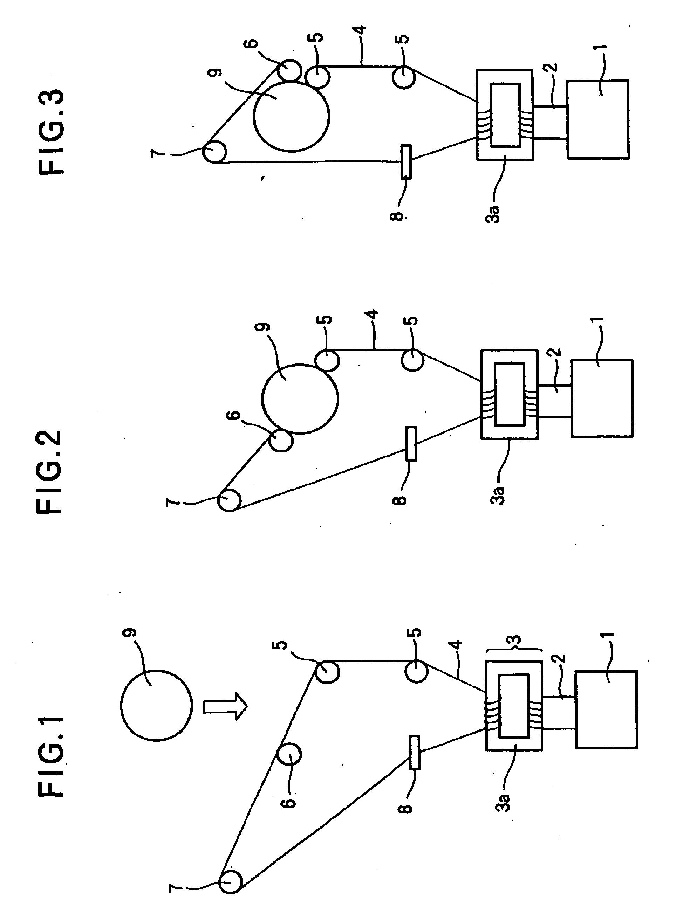

FIG. 1 is a plan view schematically illustrating a CRT separation apparatus according to a first embodiment of the invention. The apparatus has a high-frequency power source 1 including, for example, a thyristor inverter circuit of the current type or a transistor inverter circuit of the voltage type. These types of power source are preferable with regard to efficiency, stop-start instantaneity, and maintainability, but it is also possible to use, for example, a high-frequency power source of the vacuum tube oscillator type. The invention is not limited to any particular type of high-frequency power source.

A first conductor 2 is connected to the output terminals of the high-frequency power-source 1 and wound around the primary side of a core-form transformer 3 having a two-legged iron core 3a, forming a primary coil. A second conductor 4 such as a stranded stainless-steel cable is wound around the secondary side of this two-legged iron core 3a, forming a secondary coil. The second conductor 4 is also strung around a support guide 5, a movable guide 6, and a tension guide 7, which is also movable. The two ends of the second conductor 4 are mutually coupled by a coupling member 8, so that the second conductor 4 forms a closed electrical circuit or loop. The second conductor 4 functions as a separation cable that will be used to separate a CRT 9.

The support guide 5 provides stationary support for the second conductor 4. The movable guide 6 can be moved to wrap the second conductor 4 around the CRT 9. The tension guide 7 maintains tension on the second conductor 4 during the wrapping and heating processes (described later).

The support guide 5, movable guide 6, and tension guide 7 may comprise rollers having grooves for guiding the second conductor 4. The support guide 5 may comprise a pair of such rollers, as shown. The invention is not limited to the use of grooved rollers, however; any type of device that can support and smoothly guide the second conductor 4 may be used.

FIGS. 2 and 3 are plan views illustrating respective stages in the separation process in the first embodiment. In the separation process, the CRT 9 is moved in the direction of the arrow, bringing the side (the underside in FIG. 2) of the CRT into conformal contact with the second conductor 4 at the desired separation position. As the CRT 9 bows the second conductor 4, the tension guide 7 moves to the right as shown in FIG. 2, permitting the second conductor 4 to bend around the CRT 9 while maintaining a predetermined tension. Next, the movable guide 6 is driven around the CRT 9 as shown in FIG. 3 to a point adjacent the roller of the support guide 5, wrapping the second conductor 4 substantially completely around the CRT 9 at the desired separation position. To accommodate the movement of the movable guide 6, the tension guide 7 moves further to the right as shown in FIG. 3, still maintaining the predetermined tension on the second conductor 4. The mechanisms that move the moving guide 6 and tension guide 7 have been omitted from the drawings so as not to obscure the invention with unnecessary detail.

Next, the high-frequency power source 1 is switched on, sending high-frequency current through the primary coil formed by the first conductor 2 in the transformer 3, thereby generating a magnetic flux in the iron core 3a. This magnetic flux induces an electromotive force in the secondary coil formed by the second conductor 4, generating a high-frequency flow of current in the second conductor 4. The high-frequency current produces joule heat, heating the second conductor 4, thereby heating the CRT 9 at the position of contact with the second conductor 4. The resulting thermal strain separates the CRT 9 at the desired separation position.

During the heating process, the tension guide 7 continues to exert tension, thus taking up any slack that may be caused by thermal expansion of the second conductor 4. This tension prevents the second conductor 4 from sliding away from the desired separation position, and prevents any loss of heat at the separation position of the CRT 9.

The heating takes place rapidly because of the use of high-frequency current, and because energy is transferred efficiently to the second conductor 4 through the transformer 3. The movable guide 6 can wrap the second conductor 4 around a CRT of any size or shape. The tension guide 7 holds the second conductor 4 in conformal contact with the CRT 9 at the desired separation position, regardless of the size or shape of the CRT. If a stranded stainless-steel cable is used as the second conductor 4, the second conductor 4 can withstand repeated wrapping and heating without becoming brittle or breaking.

The first embodiment can accordingly separate all types of CRTs quickly and efficiently.

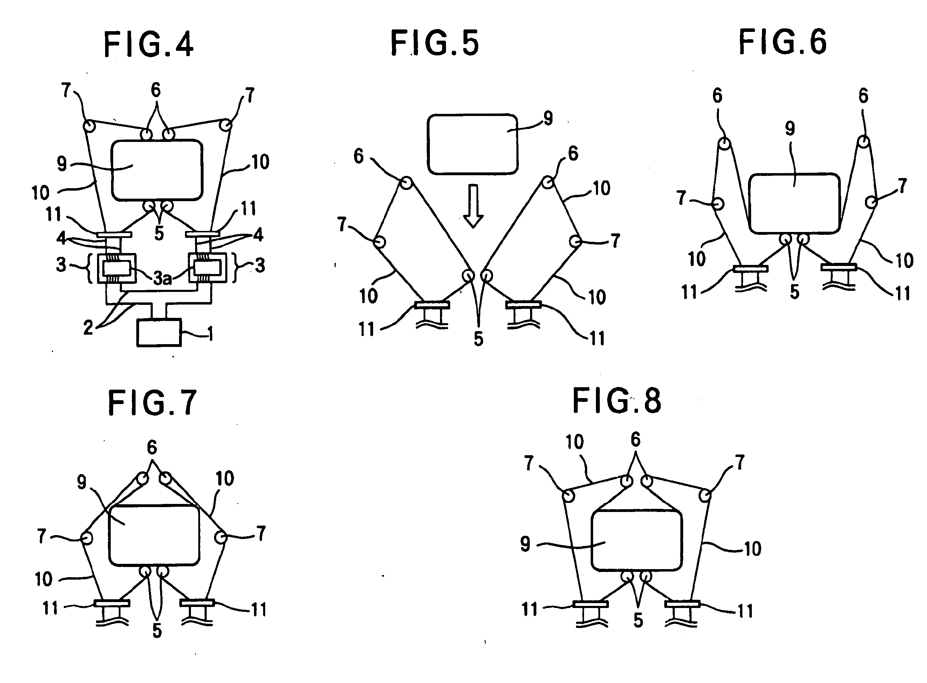

FIG. 4 is a plan view schematically illustrating a CRT separation apparatus according to a second embodiment of the invention. The same high-frequency power source 1 and first conductor 2 are used as in the first embodiment, but the first conductor 2 is wound as a primary coil in two core-form transformers 3, each having a two-legged iron core 3a. A pair of second conductors 4 are wound as secondary coils on the secondary sides of the two iron cores 3a. The ends of the second conductors 4 are coupled to the ends of a pair of third conductors 10 by a pair of stationary coupling devices 11 that hold the ends of the second and third conductors 4, 10 in fixed positions. The third conductors 10 may be stranded stainless-steel cables similar to the second conductors 4 in the first embodiment. The second and third conductors 4, 10 form a pair of closed electrical circuits or loops.

The third conductors 10 are strung around respective support guides 5, movable guides 6, and tension guides 7, each comprising, for example, a single grooved roller. These guides have the same function as in the first embodiment: the support guides 5 provide stationary support; the movable guides 6 can be moved to wrap the third conductors 10 around the CRT 9; the tension guides 7 maintain tension on the third conductors during the wrapping and heating processes. Each third conductor 10 is wrapped substantially halfway around the CRT 9. In combination, the two third conductors 10 wrap almost completely around the CRT 9.

FIGS. 5 through 8 are plan views illustrating respective stages in the separation process in the second embodiment. Referring to FIG. 5, at the beginning of the separation process, the movable guides 6 are spaced farther apart than the width of the CRT 9. The CRT 9 is moved toward the third conductors 10 as indicated by the arrow, and the side (the underside in FIG. 5) of the CRT 9 is urged against the support guides 5 as shown in FIG. 6. During this process, the tension guides 7 move inward while maintaining tension on the third conductor 10. The movable guides 6 are then driven toward each other above the CRT 9 as shown in FIG. 7, and the tension guides 7 move further inward. Next, the tension guides 7 are moved until they are above the CRT 9 as shown in FIG. 8. Finally, the movable guides 6 are moved until the movable guides 6 contact the CRT 9 (via the third conductors 10), bringing the third conductors 10 into conformal contact with substantially the entire circumference of the CRT 9 as shown in FIG. 4.

The high-frequency power source 1 is then switched on, generating high-frequency current in the loops formed by the second and third conductors 4, 10, thus producing joule heat and thermal strain, thereby separating the CRT 9 as explained in the first embodiment.

Although the second embodiment requires more conductors and guides than the first embodiment, the mechanisms (not shown) that actuate the movable guides 6 and tension guides 7 can be simplified in that a simple sequence of rectilinear motions suffices to wrap the third conductors 10 around any type of CRT 9.

A further advantage of the second embodiment is that the third conductors 10, which function as separation cables, are not wound around the iron cores 3a of the transformers 3. The separation cables can accordingly be replaced more easily than in the second embodiment, should such replacement become necessary due to wear and tear, or to a change in specifications.

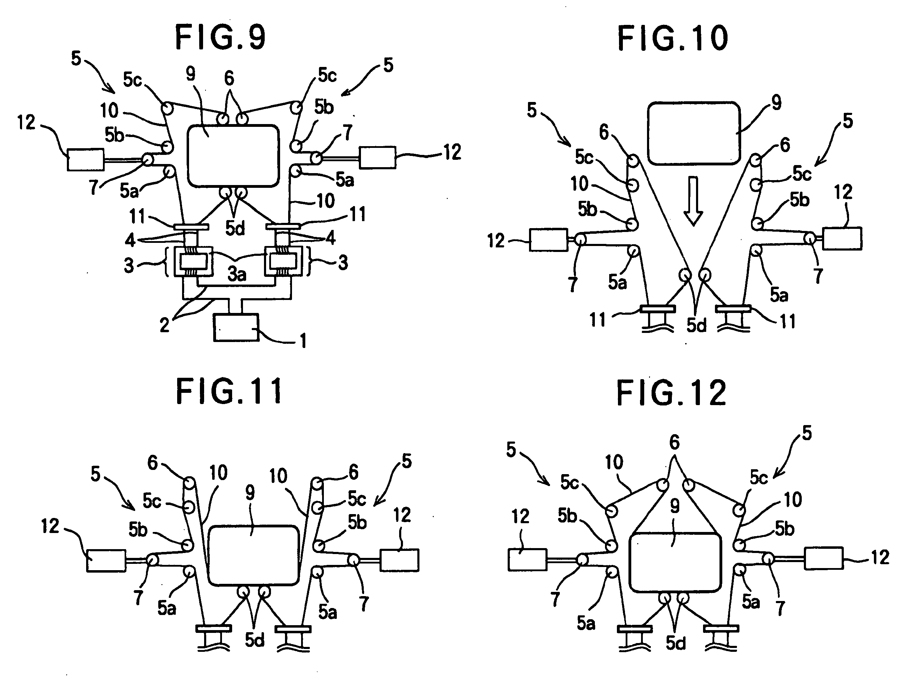

FIG. 9 is a plan view schematically illustrating a variation of the second embodiment in which the structure and arrangement of the support guides 5 and tension guides 7 are modified. The support guide 5 on each side of the CRT 9 comprises four grooved rollers 5a, 5b, 5c and 5d. The tension guide 7 on each side comprises a single grooved roller actuated by an air cylinder 12. The third conductor 10 on each side runs over the first roller 5a of the support guide 5, then over the tension guide 7, then over the second and third rollers 5b and 5c of the support guide 5, then over the movable guide 6, and finally over the fourth roller 5d of the support guide 5.

FIGS. 10 through 12 are plan views illustrating respective stages in the separation process in the variation of the second embodiment. Referring to FIG. 10, the movable guides 6 are initially positioned above the third rollers 5c of the support guides 5 as shown in FIG. 10. As the CRT 9 moves in the direction of the arrow, it meets the third conductors 10 at points between the movable guides 6 and the fourth rollers 5d of the support guides 5. As the third conductors 10 are bowed, the tension guides 7 are drawn inward, as shown in FIG. 11. The movable guides 6 remain stationary until the CRT 9 contacts the fourth rollers 5d of the support guides (via the third conductors 10), as shown in FIG. 11, then are driven toward each other as shown in FIG. 12. The rollers of the tension guides 7 move further inward to accommodate this motion. Finally, the movable guides 6 are moved to the positions shown in FIG. 9 and contact the CRT 9 (via the third conductors 10), the tension guides 7 moving still further inward to thereby maintain constant tension on the third conductor 10.

Should the third conductors 10 expand during heating after the high-frequency power source 1 is switched on, the air cylinders 12 pull the tension guides 7 outward to maintain constant tension.

This variation of the second embodiment enables the tension guides 7 to be moved by a simple actuating mechanism, since the tension guides 7 only have to move in the inward-outward direction and do not have to move in the direction perpendicular to the inward-outward direction.

The actuating mechanism is not limited to an air cylinder; any type of mechanism that can move the tension guides 7 inward and outward can be used.

In the above-described second embodiment and the variation, the number of the separation cables (the third conductors 10) is not limited to 2, but can be 1. For example, in FIG. 4, the two third conductors 10 can be joined into a single separation cable, so that only a single transformer 3 and a single second conductor 4 are necessary.

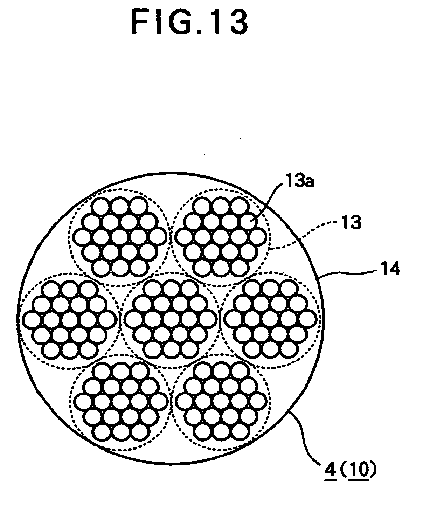

FIG. 13 shows a preferred cross-sectional structure of the separation cable, that is, the second conductor 4 in the first embodiment or the third conductor 10 in the second embodiment. The separation cable is a stranded cable 14 comprising, for example, seven main strands 13 twisted together. The twisting of the main strand 13 is not visible in the cross-sectional view in FIG. 13. Each of the main strands 13 is itself a stranded cable comprising a plurality of stainless steel wires 13a twisted together.

A separation cable 14 of this type has high tensile strength and bending flexibility, so it does not readily break due to thermal embrittlement and does not often have to be replaced. A further advantage is superior heat retention, due to the multiply stranded structure. This advantage reduces the amount of heat lost to the ambient environment between separation operations, thus reducing the amount of energy consumed for heating and shortening the cycle time of the separation process.

The invention is not limited to the embodiments and variations described above. Those skilled in the art will recognize that further variations are possible within the scope of invention, which is defined by the appended claims.

## Claims

1. A cathode ray tube (CRT) separation apparatus for separating a CRT having a faceplate and a funnel, the CRT separation apparatus comprising:
a high-frequency power source (1);
a transformer (3) having a primary side and a secondary side;
a first conductor (2) electrically coupling the high-frequency power source (1) to the primary side of the transformer (3);
a separation cable (4) electrically coupled to the secondary side of the transformer (3) for heating the cathode may tube at desired positions for separation;
a support guide (5) for supporting the separation cable (4) at a fixed position;
a movable guide (6) for wrapping the separation cable (4) around the CRT; and
a tension guide (7) for applying tension to the separation cable (10).

2. The CRT separation apparatus as set forth in claim 1, wherein the transformer (3) has an iron core (3a), the first conductor (2) being wound as a primary coil on the iron core, the separation cable (4) being wound as a secondary coil on the iron core (3a).

3. The CRT separation apparatus as set forth in claim 2, wherein the separation cable (4) has two ends, further comprising a coupling member (8) for coupling the two ends of the separation cable together to form an electrically closed circuit.

4. The CRT separation apparatus as set forth in claim 1, wherein the separation cable (10) has two ends, further comprising:
a second conductor (4) electrically coupled to the secondary side of the transformer (3); and
a coupling member (11) electrically coupling the two ends of the separation cable (10) to the second conductor (4).

5. The CRT separation apparatus as set forth in claim 4, wherein the transformer (3) has an iron core (3a), the first conductor (2) being wound as a primary coil on the iron core, the second conductor (4) being wound as a secondary coil on the iron core.

6. The CRT separation apparatus as set forth in any of claims 1 to 5, wherein the support guide (5), the movable guide (6), and the tension guide (7) comprise respective grooved rollers.

7. The CRT separation apparatus as set forth in any of claims 1 to 5, wherein the movable guide (6) wraps the separation cable (4) substantially completely around the CRT.

8. The CRT separation apparatus as set forth in any of claims 1 to 5, wherein the movable guide (6) comprises a pair of rollers, each roller wrapping the separation cable (10) substantially halfway around the CRT.

9. The CRT separation apparatus as set forth in any of claims 1 to 5, further comprising an air cylinder (12) for actuating the tension guide (7).

10. The CRT separation apparatus as set forth in any of claims 1 to 5, wherein the separation cable (4) comprises a plurality of main strands (13) twisted together, each main strand comprising a plurality of stainless-steel wires twisted together.

## Patentansprüche

1. Kathodenstrahlröhren (CRT)-Trennvorrichtung zum Trennen einer CRT mit einem Schirmträger und einem Trichter, welche CRT-Trennvorrichtung aufweist:
eine Hochfrequenz-Leistungsquelle (1);
einen Transformator (3) mit einer Primärseite und einer Sekundärseite;
einen ersten Leiter (2), der die Hochfrequenz-Leistungsquelle (1) mit der primärseite des Transformators (3) elektrisch koppelt;
ein Trennkabel (4, 10), das elektrisch mit der Sekundärseite des Transformators (3) gekoppelt ist zum Erwärmen der Kathodenstrahlröhre an gewünschten Positionen für eine Trennung;
eine Stützführung (5) zum Stützen des Trennkabels (4) an einer festen Position;
eine bewegbare Führung (6) zum Wickeln des Trennkabels (4) um die CRT; und
eine Spannungsführung (7) zum Ausüben einer Spannung auf das Trennkabel (4).

2. CRT-Trennvorrichtung nach Anspruch 1, bei der der Transformator (3) einen Eisenkern (3a) hat, der erste Leiter (2) als eine Primärspule auf den Eisenkern gewickelt ist, das Trennkabel (4) als eine Sekundärspule auf den Eisenkern (3a) gewickelt ist.

3. CRT-Trennvorrichtung nach Anspruch 2, bei der das Trennkabel (4) zwei Enden hat, weiterhin aufweisend ein Kopplungsteil (8) zum Koppeln der beiden Enden des Trennkabels miteinander, um einen elektrisch geschlossenen Schaltkreis zu bilden.

4. CRT-Trennvorrichtung nach Anspruch 1, bei der das Trennkabel (10) zwei Enden hat, weiterhin aufweisend;
einen zweiten Leiter (4), der mit der Sekundärseite des Transformators (3) elektrisch gekoppelt ist; und
ein Kopplungsteil (11), das die beiden Enden des Trennkabels (10) elektrisch mit dem zweiten Leiter (4) koppelt.

5. CRT-Trennvorrichtung nach Anspruch 4, bei der der Transformator (3) einen Eisenkern (3a) hat, der erste Leiter (2) als eine Primärspule auf den Eisenkern gewickelt ist, der zweite Leiter (4) als eine Sekundärspule auf den Eisenkern gewickelt ist.

6. CRT-Trennvorrichtung nach einem der Ansprüche 1 bis 5, bei der die Stützführung (5), die bewegbare Führung (6) und die Spannungsführung (7) jeweils mit Nuten versehene Rollen aufweisen.

7. CRT-Trennvorrichtung nach einem der Ansprüche 1 bis 5, bei der die bewegbare Führung (6) das Trennkabel (4) im Wesentlichen vollständig um die CRT wickelt.

8. CRT-Trennvorrichtung nach einem der Ansprüche 1 bis 5, bei der die bewegbare Führung (6) ein Paar von Rollen aufweist, wobei jede Rolle das Trennkabel (10) im Wesentlichen zur Hälfte um die CRT wickelt.

9. CRT-Trennvorrichtung nach einem der Ansprüche 1 bis 5, weiterhin aufweisend einen Luftzylinder (12) zum Betätigen der Spannungsführung (5).

10. CRT-Trennvorrichtung nach einem der Ansprüche 1 bis 5, bei der das Trennkabel (4) mehrere miteinander verdrillte Hauptlitzen (13) aufweist, wobei jede Hauptlitze mehrere miteinander verdrillte, rostfreie Drähte aufweist.

## Revendications

1. Dispositif de séparation pour tube cathodique (CRT) destiné à séparer un CRT ayant une dalle et un cône, le dispositif de séparation pour CRT comportant les éléments suivants :
- une source d'alimentation haute fréquence (1),
- un transformateur (3) ayant un primaire et un secondaire,
- un premier conducteur (2) couplant électriquement la source d'alimentation haute fréquence (1) au primaire du transformateur (3),
- un câble de séparation (4, 10) couplé électriquement au côté secondaire du transformateur (3) afin de réchauffer le tube cathodique à des positions souhaitées pour une séparation,
- un guide de support (5) pour soutenir le câble de séparation (4) dans une position fixe,
- un guide mobile (6) pour enrouler le câble de séparation (4) autour du CRT, et
un guide de tension (7) pour appliquer une tension au câble de séparation (4).

2. Dispositif de séparation pour CRT selon la revendication 1, dans lequel le transformateur (3) a un noyau de fer (3a), le premier conducteur (2) étant enroulé sous la forme d'une bobine primaire sur le noyau de fer, le câble de séparation (4) étant enroulé sous la forme d'une bobine secondaire sur le noyau de fer (3a).

3. Dispositif de séparation pour CRT selon la revendication 2, dans lequel le câble de séparation (4) a deux extrémités, comportant en outre un élément de couplage (8) pour coupler ensemble les deux extrémités du câble de séparation afin de former un circuit électrique fermé.

4. Dispositif de séparation pour CRT selon la revendication 1, dans lequel le câble de séparation (10) a deux extrémités, et comporte en outre :
- un second conducteur (4) couplé électriquement au côté secondaire du transformateur (3), et
- un élément de couplage (11) couplant électriquement les deux extrémités du câble de séparation (10) au second conducteur (4).

5. Dispositif de séparation pour CRT selon la revendication 4, dans lequel le transformateur (3) a un noyau de fer (3a), le premier conducteur (2) étant enroulé sous la forme d'une bobine primaire sur le noyau de fer, le second conducteur (4) étant enroulé sous la forme d'une bobine secondaire sur le noyau de fer.

6. Dispositif de séparation pour CRT selon l'une quelconque des revendications 1 à 5, dans lequel le guide de support (5), le guide mobile (6), et le guide de tension (7) comportent des rouleaux rainurés respectifs.

7. Dispositif de séparation pour CRT selon l'une quelconque des revendications 1 à 5, dans lequel le guide mobile (6) enroule le câble de séparation (4) sensiblement complètement autour du CRT.

8. Dispositif de séparation pour CRT selon l'une quelconque des revendications 1 à 5, dans lequel le guide mobile (6) comporte une paire de rouleaux, chaque rouleau enroulant le câble de séparation (10) sensiblement à mi-chemin autour du CRT.

9. Dispositif de séparation pour CRT selon l'une quelconque des revendications 1 à 5, comportant en outre un vérin pneumatique (12) pour actionner le guide de tension (7).

10. Dispositif de séparation pour CRT selon l'une quelconque des revendications 1 à 5, dans lequel le câble de séparation (4) comprend une pluralité de brins principaux (13) torsadés ensemble, chaque brin principal comportant une pluralité de fils en acier inoxydable torsadés ensemble.
